# EUROPEAN PATENT APPLICATION

(11) **EP 4 075 371 A1**
(43) Date of publication of application: **19.10.2022**
(21) Application number: 20900139.5
(22) Date of filing: 10.12.2020
(51) Int. Cl.: G06Q 50/26, G06F 21/31, G06F 21/62

(54) **ELECTRONIC VOTING SYSTEM AND ELECTRONIC VOTING METHOD**

(30) Priority: 13.12.2019 KR 20190166424
(71) Applicant: Yoon, Seong Min, Guri-si, Gyeonggi-do 11952 (KR)
(72) Inventor: Yoon, Seong Min, Guri-si, Gyeonggi-do 11952 (KR)
(74) Representative: Cabinet Chaillot
(86) International application number: PCT/KR2020/018043
(87) International publication number: WO 2021/118251

(57) **Abstract**

The present invention relates to an electronic voting system and an electronic voting method. A system for electronic voting comprising: an operation computer comprising at least one processor and a memory coupled to the processor that causes the system to perform: performing, by at least one processor of the operating computer, user authentication of voting participants who wish to participate in the online electronic voting; anonymizing, by at least one processor of the operating computer, information of the voting participants whose the user authentication has been completed; giving, by at least one processor of the operating computer, unique identification information to each of the voting participant who have completed anonymization process; collecting, by at least one processor of the operating computer, the voting information that the electronic voting was conducted using the unique identification information given to the voting participants, and counting the collected voting information as a voting result.

## Description

### BACKGROUND OF THE INVENTION

### Field of the Invention

The present invention relates to an electronic voting system and electronic voting method. More particularly, in a system in which an electronic voting operation computer and a plurality of voting participant terminals used by voters are connected through a network, and the voting participant terminal connects to the electronic voting operation computer and performs electronic voting, the present invention is to strengthen the simplification of user authentication, and the security and anonymity of the voting participants. And the present invention is to prevent manipulation of the total number of voters, the number of votes cast and the count by distributing and storing the voting process and voting result information to the operating computer, the voting target terminals, the voting participant terminals and cloud system storage. In addition, the present invention is to provide an electronic voting system and electronic voting method capable of simple and rapid execution by managing the performance of electronic voting as described above.

### Description of the Related Art

Currently, voting in elections for politicians is not using the online electronic voting method due to concerns about tampering. However, in various fields of opinion gathering such as corporate shareholders' meetings, celebrity selection in the media, opinion polls, and products, the online electronic voting using the network is being conducted. Therefore, if the worrying problems such as the possibility of fraud and manipulation of electronic voting are resolved, it will be possible to carry out all-out electronic voting in elections.

Although some electronic voting through the network is being carried out in a specific field, there are problems in the absence of verification of the accuracy of online user authentication and the complexity of the voter side. Since manipulation of the voting process or voting results is actually performed, there is a problem that operators and voters are hesitant to adopt electronic voting due to low reliability of electronic voting despite many advantages of online electronic voting.

Recently, in order to solve the above problems of the electronic voting system, the National Election Commission is promoting the development and implementation of the electronic voting system using the block chain. However, the electronic voting system using the block chain currently being promoted is just to block the possibility of manipulation through distributed storage of voting results, and there is a problem that cannot solve the various problems of the above-mentioned electronic voting system.

Many inventions related to electronic voting have been filed patent application and patented. In this regard, the invention of a 'safe electronic voting system' has been disclosed as Republic of Korea Patent Publication No. 10-2001-0091742 (published on: October 23, 2001).

The published invention has the following characteristics. A safe electronic vote system is provided to supply an electronic vote system protocol of an open type communication net for supplying safety and convenience to a voter and to reduce human power, time and cost required in voting and official counting of votes. The safe electronic vote system includes four progresses. In the first progress, each voter generates the individual session ID and registers information about the voter. In the second progress, the information registered by the first progress is confirmed and the electronic vote is carried out. In the third progress, the information about the vote by the second progress is confirmed in an election management committee and a voting place and votes are collected into one sum. In the fourth progress, the result of the sum of votes according to the third progress is published.

In addition, as a public report of a Korean institution, a study on the applicability of the online voting system using the block chain method of the 2017 Election and Training Institute Research Service Report (September 29, 2017, Korea Internet Information Society) is disclosed.

The above public report confirms that if block chain technology is applied to voting, the result can be checked immediately after voting is completed, voting management costs are greatly reduced, and controversy surrounding voting fraud or manipulation can be resolved. When block chain technology is applied to the existing online voting system, decentralization is achieved because the system is not driven by a central server. Therefore, even if the network of one computer is unstable, it does not affect other networks, so a stable election system can be operated. Since all voters share the history of voting results, hacking is impossible and integrity can be guaranteed, so the block chain basically has fairness, transparency, and certainty. In addition, in terms of security, which is pointed out as a limitation of the existing online voting system, the probability of problems occurring is very low compared to the existing system.

In spite of the disclosed technical idea, the disclosed invention and the invention of the public report have a weak problem in user authentication of voting participants and guarantee of anonymity of voting participants.

Therefore, in the electronic voting system using online or network, an invention of an electronic voting system and method thereof having following characteristics is desired.

### SUMMARY OF THE INVENTION

The present invention is to solve the problems related to electronic voting of the prior art. An object of the present invention is to provide an electronic voting system and electronic voting method using an identity authentication means based on the identity verification of related persons including acquaintances of the voting participants in order to simplify the user authentication of the voting participants and prevent errors.

Another object of the present invention is to provide an electronic voting system and electronic voting method using an anonymization method that can thoroughly secure the anonymity of voting participants by deleting the initial information of voting participants, creating and giving the same new information to all voting participants, and giving unique identification information to each voting participant to participate in electronic voting.

Another object of the present invention is to provide an electronic voting system and an electronic voting method using a distributed storage means that electronic voting count manipulation is impossible by allowing the operation computer, voting target terminals, and voting participant terminals to share the verification information of the voting result in real time.

### [Technical Solution]

As a technical solution for achieving the object of the present invention, a first aspect of the present invention provides an electronic voting system including an operating computer and cloud computing system, wherein the operating computer comprises a user authentication management unit that performs the user authentication of voting participants by acquiring identity verification information through acquaintances of voting participants, etc.; an anonymization management unit that anonymizes the information of the voting participants whose user authentication has been completed in the user authentication management unit through granting or encryption of identification information; a voting information management unit that manages voting information of the voting participants anonymized in the anonymization management unit; and a result processing management unit for performing a counting process on the voting participants and the voting targets for the voting results collected in real time from the voting information management unit, and for distributing and storing the system storage means and cloud storage means, the voting participant terminals and the voting target terminals, a data storage computer communicatively connected to or included in the operating computer and storing data such as the voting participant information, voting target information, and voting result information, at least one requestor terminal that is communicatively connected to the operating computer to provide voting target information and receive voting results, at least one participant terminal that is communicatively connected to the operating computer to perform user authentication and participate in electronic voting, and a result data storage computer for storing the voting result data provided from the operating computer, and wherein the cloud computing system provides information on voting results stored through the participant terminal and the requester terminal.

In addition, as a second aspect of the present invention provides the electronic voting system comprising: an operating computer that executes and manages user authentication of the voting participants, qualifications verification of voting participants, provision of voting target information, execution of anonymization of voting participants, verification and counting of voting results, and distributed storage of information; an operation data storage device communicatively connected to or included in the operating computer and storing data such as voting participants, voting targets, and result verification; at least one voting target terminal that is communicatively connected to the operating computer to provide voting target information and to receive voting result information from the operating computer; at least one participant terminal that is communicatively connected to the operating computer to perform user authentication and voting of the voting participants; an identity authentication system that is communicatively connected to the operating computer and the participant terminal and performs user authentication by confirming the identity verification of the voting participant; and a cloud computing system that is communicatively connected to the operating computer and stores the voting information of the voting participants, the vote information of the voting target, and the voting result aggregate information, and is communicatively connected to the voting participant terminal and the voting target terminal and provides stored voting related information.

In addition, a third aspect of the present invention provides the electronic voting system comprising: an operating computer that performs user authentication of the voting participants and operates online electronic voting; and at least one participant terminal that is communicatively connected to the operating computer and performs the electronic voting; wherein user authentication of the voting participants by the operating computer comprising: requests to confirm whether the voting participant is the same person as the person acquainted with the relevant person by using the terminal information of the related persons including the acquaintance of the voting participant obtained from the participant terminal to related person terminals; determines the consistency between the analysis data analyzed by the information included in the communication details of the related persons provided by the related persons of the voting participant and the data provided by the operating computer itself, and performs the user authentication by verifying the identity of voting participants who want to receive an approval of user authentication based on the result of the consistency determination. In addition, a fourth aspect of the present invention provides the electronic voting system comprising: an operating computer that operates online electronic voting by performing an anonymization of voting participants whose user authentication has been completed, and at least one participant terminal communicating with the operating computer to perform electronic voting; wherein user authentication of the voting participants by the operating computer comprising: requests to confirm whether the voting participant is the same person as the person acquainted with the relevant person by using the terminal information of the related persons including the acquaintance of the voting participant obtained from the participant terminal to related person terminals; determines the consistency between the analysis data analyzed by the information included in the communication details of the related persons provided by the related persons of the voting participant and the data provided by the operating computer itself, and performs the user authentication by verifying the identity of voting participants who want to receive an approval of user authentication based on the result of the consistency determination, and wherein the anonymization of the voting participants comprising: deletes all the information of a plurality of voting participant whose user authentication has been completed, generates one new information and give the same new information created to a plurality of the voting participant, and generates unique identification information and gives to each of the plurality of voting participant.

In addition, a fifth aspect of the present invention provides the electronic voting system comprising: an operating computer that operates an online electronic voting that performs user authentication of voting participants, anonymizes voting participants who have completed user authentication, and distributes and stores voting results of anonymized voting participants to share the ledger; and at least one participant terminal communicating with the operating computer to perform electronic voting; wherein user authentication of the voting participants by the operating computer comprising: requests to confirm whether the voting participant is the same person as the person acquainted with the relevant person by using the terminal information of the related persons including the acquaintance of the voting participant obtained from the participant terminal to related person terminals; determines the consistency between the analysis data analyzed by the information included in the communication details of the related persons provided by the related persons of the voting participant and the data provided by the operating computer itself, and performs the user authentication by verifying the identity of voting participants who want to receive an approval of user authentication based on the result of the consistency determination, wherein the anonymization of the voting participants comprising: deletes all the information of a plurality of voting participant whose user authentication has been completed, generates one new information and give the same new information created to a plurality of the voting participants, and generates unique identification information and gives to each of the plurality of voting participants, and wherein the ledger sharing of the voting results comprising: manages virtual account information, which is a storage space allocated to at least one voting target, and identification account information, which is a storage space allocated to each of the plurality of voting participants; stores information on the number of votes for each voting target in the at least one virtual account of the voting target, and stores the voting information of each voting participant who voted for the specific voting target in the identification account of each voting participant; and matches the information recorded in the virtual account of a specific voting target with the value of the information recorded in the identification account of each voting participant who voted for the specific voting target.

In addition, a sixth aspect of the present invention provides the electronic voting system comprising: an operating computer that operates and manages an online electronic and voting participation means for performing electronic voting, each outputted to at least one participant terminal communicatively connected to the operating computer; the operating computer comprises a user authentication processing module for performing user authentication of each voting participant requesting vote participation through the participant terminal, and an anonymization processing module for anonymizing information of voting participants whose user authentication has been completed in the user authentication module; wherein the user authentication processing module receives the initial information of the voting participants transmitted from at least one participant terminal and performs user authentication processing of the voting participants through identification of each voting participant, and wherein the anonymization processing module deletes all the initial information of the voting participants whose user authentication has been completed in the user authentication processing module, then creates a single piece of new information and grants it to all voting participants to perform anonymization processing of voting participants.

In addition, a seventh aspect of the present invention provides the electronic voting method comprising: requesting, by a participant terminal, participation in voting by a person who wishes to participate in online electronic voting by inputting personal information into the participant terminal; receiving, by an operating computer, voting participation request information including personal information of a person who wants to participate in online electronic voting input into the participant terminal, and checking whether or not they are eligible to participate in voting; requesting, by the operating computer, an identity verification for performing user authentication as a voting participant by an identity authentication means when it is confirmed that a person who wants to participate in the online electronic voting is eligible to participate in voting; requesting, by the identity authentication means, information about a relationship such as an acquaintance of the voting participant with the participation terminal information of the voting participant included in the identity verification request information from the operating computer; requesting, by the identity authentication means, to confirm whether the voting participant is a person known to the related person to terminal information included in at least one related person information transmitted from the participant terminal; determining, by the identity authentication means, the consistency between the analysis data analyzed by the information included in the communication details of the related persons provided by the related persons of the voting participant and the data provided by the operating computer itself, and providing the identity verification information by verifying the identity of voting participants based on the result of the consistency determination; performing, by the operating computer, user authentication of the voting participant based on the identity confirmation information transmitted from the identity verification means; deleting, by the operating computer, the voting participant information input to receive the user authentication of the voting participants whose user authentication has been completed; generating and giving, by the operating computer, the same new information to all of the voting participants after confirming that the voting participant information of the voting participants has been deleted; generating and giving, by the operating computer, unique identification information that is distinct from each other to the voting participants after confirming that the same new information is provided to all voting participants; counting, by the operating computer, votes performed by each voting participant based on their own identification information; storing, by the operating computer, information on the number of votes for each voting target in the at least one virtual account of the voting target, and storing the voting information of each voting participant who voted for the specific voting target in the identification account of each voting participant; and when it is conformed matching the information recorded in the virtual account of a specific voting target with the value of the information recorded in the identification account of each voting participant who voted for the specific voting target, sharing, by the operating computer, a ledger in which information on the number of votes and a number of votes cast are recorded with the voting participants.

In addition, an eighth aspect of the present invention provides the electronic voting method through anonymization of voting participants comprising: the anonymization of voting participants comprising: receiving, by an operating computer, a voting participation request including initial information of the voting participants transmitted from the at least one participating terminal; performing, by the operating computer, user authentication of each voting participant by extracting identity verification information of the voting participants based on the initial information of the voting participants; deleting, by the operating computer, the initial information of the voting participants for which the user authentication has been completed; generating, by the operating computer, a piece of new information and giving the same to all voting participants; and confirming, by the operating computer, the deletion of the initial information of the voting participants and the giving of the same new information to the voting participants.

### ADVANTAGEOUS EFFECTS

According to the present invention, by performing the user authentication of the voting participant using the identity verification means based on the identity verification of related persons including acquaintances, etc., the user authentication of the voting participant is simple and error-free, and fraudulent voting, etc. can be prevented. In addition, after deleting the initial information of the voting participants whose user authentication was performed, creating and granting the same new information to all voting participants, each voting participant is given unique identification information to participate in the electronic voting. In this way, it is possible to thoroughly secure equality and secret voting, which are the basics of voting, by using anonymization means that can ensure the anonymity of voting participants. In addition, by allowing the verification and storage of voting results to be shared with the operating computer, voting targets, and voting participants in real time, there is an effect that can fundamentally prevent manipulation of voting aggregation using distributed storage means where electronic voting count manipulation is impossible.

### BRIEF DESCRIPTION OF THE DRAWINGS

FIG. 1 is a schematic configuration diagram of an embodiment of an electronic voting system of the present invention.
FIG. 2 is a schematic configuration diagram of another embodiment of the electronic voting system of the present invention.
FIG. 3 is a schematic configuration diagram of an embodiment of an operation computer which is a main part of the electronic voting system of the present invention.
FIG. 4 is a schematic configuration diagram of an embodiment of a voting target information storage unit which is a main part of a data storage computer in the electronic voting system of the present invention.
FIG. 5 is a schematic configuration diagram of an embodiment of a participant information storage unit which is a main part of a data storage computer in the electronic voting system of the present invention.
FIG. 6 is a schematic configuration diagram of an embodiment of a results verification information storage unit which is a main part of a data storage computer in the electronic voting system of the present invention.
FIG. 7 is a schematic configuration diagram of an embodiment of an identity authentication system which is a main part of the electronic voting system of the present invention.
FIG. 8 is a schematic configuration diagram of an embodiment of an identity management computer which is a main part of the identity authentication system in the electronic voting system of the present invention.
FIG. 9 is a schematic configuration diagram of an embodiment of an authentication request management module which is a main part of the identity authentication system in the electronic voting system of the present invention.
FIG. 10 is a schematic configuration diagram of an embodiment of an authentication information management module which is a main part of the identity authentication system in the electronic voting system of the present invention.
FIG. 11 is a schematic configuration diagram of an embodiment of an artificial intelligence computer which is a main part of the identity authentication system in the electronic voting system of the present invention.
FIG. 12 is a schematic configuration diagram of an embodiment of an identity verification execution management module which is a main part of the identity authentication system in the electronic voting system of the present invention.
FIG. 13 is a schematic configuration diagram of an embodiment of a data storage computer which is a main part of the identity authentication system in the electronic voting system of the present invention.
FIG. 14 is a schematic configuration diagram of an embodiment of an analysis data storage computer which is a main part of the identity authentication system in the electronic voting system of the present invention.
FIG. 15 is a schematic configuration diagram of an embodiment of an electronic voting method of the present invention.
FIG. 16 is a schematic configuration diagram of another embodiment of the electronic voting method of the present invention.
FIG. 17 is a schematic configuration diagram of an embodiment of an anonymization process which is a main part of the electronic voting method of the present invention.

### DETAILED DESCRIPTION OF THE PREFERRED EMBODIMENT

Hereinafter, embodiments of the present invention will be described in detail with reference to the accompanying drawings.

Although the terms used in the present invention may have various expressions, those determined to be suitable for describing the embodiment of the present invention are selected and used among them. Therefore, the terms used in the present invention are not limited thereto, and may be used as terms that can be substituted or substituted in general in the technical field.

Also, the terms used in the present invention may include a plurality of meanings. For example, among terms describing an embodiment of the present invention, "- computer, ~ unit, ~ module, ~ means", etc. may indicate hardware itself, and software executed by utilizing the hardware resource, that is, a web program. , application programs, cloud computing programs, etc. Accordingly, it may be appropriately interpreted corresponding to the entire context of the description of the embodiments of the present invention.

In addition, among the terms used in the description of the embodiments of the present invention, "- system" may mean an invention consisting of a combination of components including at least one hardware or software, a configuration of the invention, or a configuration element of the invention.

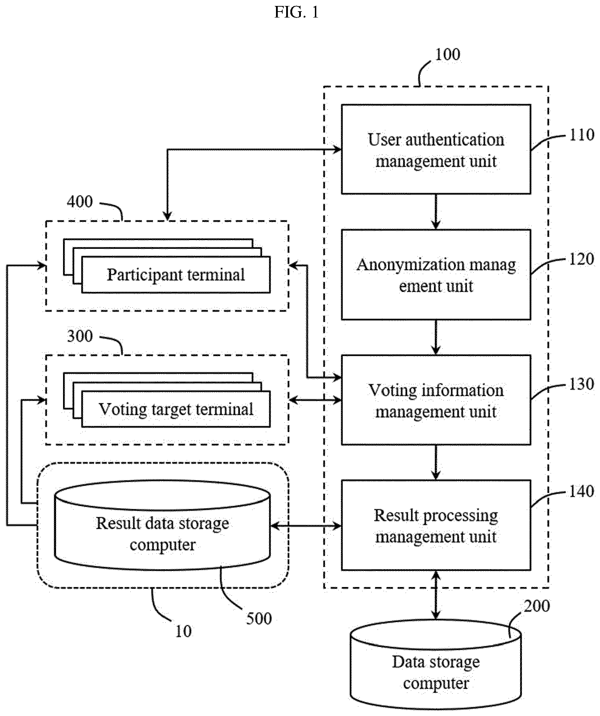

FIG. 1 is a schematic configuration diagram of an embodiment of anelectronic voting system of the present invention.

As illustrated in FIG. 1, the electronic voting system of the present invention comprising: an operating computer 100 comprises a user authentication management unit 110 that performs the user authentication of voting participants by acquiring identity verification information through acquaintances of voting participants, etc.; an anonymization management unit 120 that anonymizes the information of the voting participants whose user authentication has been completed in the user authentication management unit 110 through granting or encryption of identification information; avoting information management unit 130 that manages voting information of the voting participants anonymized in the anonymization management unit 120; and a result processing management unit 140 for performing a counting process on the voting participants and the voting targets for the voting results collected in real time from the voting information management unit 130; a data storage computer 200 communicatively connected to or included in the operating computer 100 and storing data such as the voting participant information, voting target information, and voting result information; at least one requester terminal 300 that is communicatively connected to the operating computer 100 to provide voting target information and receive voting results; at least one participant terminal 400 that is communicatively connected to the operating computer 100 to perform user authentication and participate in electronic voting; and a result data storage computer 500 for storing the voting result data provided from the operating computer 100, wherein the cloud computing system 10 provides information on voting results stored through the participant terminal 400 and the requester terminal 300.

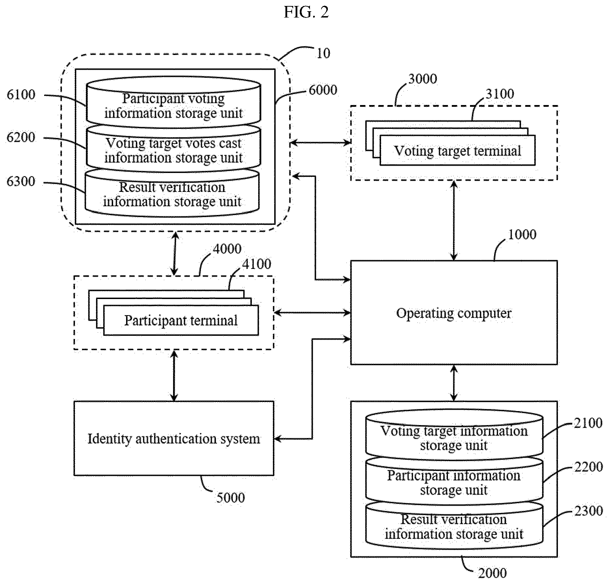

FIG. 2 is a schematic configuration diagram of another embodiment of the electronic voting system of the present invention.

As illustrated in FIG. 2, the electronic voting system of the present invention comprising: an operation computer 1000 that executes and manages user authentication of the voting participants, verification of voting qualifications of voting participants, provision of voting target information, execution of anonymization of voting participants, verification and counting of voting results, and distributed storage of information; an operation data storage unit 2000 connected to or included in the operation computer 1000 by communication means and storing data such as voting participants, voting targets and result verification; at least one requester terminal 3000 that is communicatively connected to the operating computer 1000 to provide voting target information and to receive voting result information from the operating computer 1000;at least one participant terminal 4000 that is communicatively connected to the operating computer 1000 to perform user authentication of voting participants and voting; an identity authentication system 5000 that is communicatively connected to the operating computer 1000 and the participant terminal 4000 and performs user authentication by verifying the identity of the voting participant; and a cloud computing system 6000 that is communicatively connected to the operating computer 1000 and stores a votes cast information of the voting target and a counting information of the voting results, and provides the counting information of the voting results to the participant terminal 4000 and the requester terminal 3000 connected.

The operating computers 100 and 1000 in the embodiment of the present invention shown in FIGs. 1 and 2 may be configured as a server computer in which a computer program, a web program, etc. are executed and provided with communication means. In addition, the operating computers 100 and 1000 include a general configuration of a computer, at least one hardware processor, and a memory for storing a computer program, and the at least one hardware processor executes the computer program stored in the memory. The voting target terminals 300 and 3000 and the participant terminals 400 and 4000 in the embodiment of the present invention shown in FIGS. 1 and 2 may be composed of a device including a personal computer (PC), a notebook computer, a tablet computer, a smart phone, and a portable terminal that can transmit and receive data by being connected to the external devices. The data storage computers 200 and 2000 and the result data storage computers 500 and 6000 of the cloud computing system 10 in the embodiment of the present invention shown in FIGS. 1 and 2 may be composed of a database computer or a database server system (DBMS).

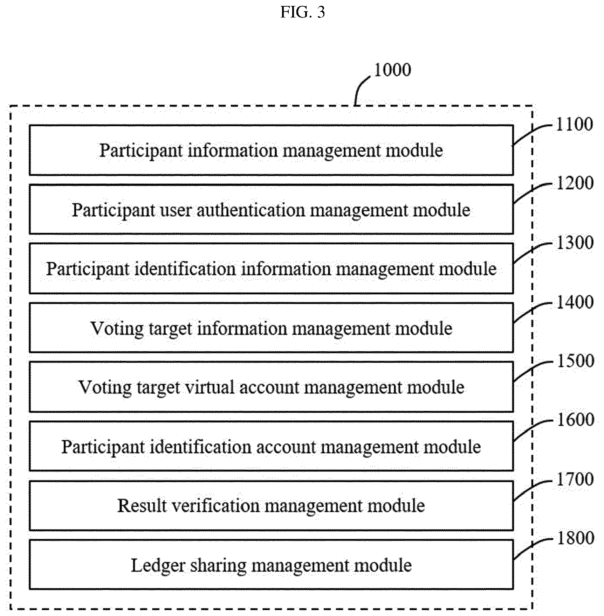

FIG. 3 is a schematic configuration diagram of an embodiment of an operation computer which is a main part of the electronic voting system of the present invention.

As illustrated in FIG. 3, the operation computer of the present invention comprising: a participant information management module 1100 that receives and stores the personal information of those who wish to participate in voting and the participant terminal information used through the participant terminal; a participant user authentication management module 1200 that receives user authentication information of those who wish to participate in the voting conducted using the identity authentication means or identity authentication system 5000, and checks and manages whether those who wish to participate in the voting for which user authentication has been completed have voting qualifications for the corresponding voting target; a participant identification information management module 1300 that manages by granting voting rights to unique identification information or encrypted unique identification information given through anonymization processing with those who wish to participate in the voting for which user authentication and voting qualifications have been completed; a voting target information management module 1400 that stores information on a target for which voting participants can vote and provides information necessary for voting among the stored voting target information to the participant terminal; a voting target virtual account management module 1500 that manages virtual account information of the storage space allocated to each voting target so that the voting results for the voting target, for example, the number of votes cast obtained by the voting target, can be stored and counted in real time; a participant identification account management module 1600 that manages identification account information that is a storage space allocated to voting participants participating in voting for a voting target; a result verification management module 1700 that aggregates voting information of the voting participants for a specific voting target and the votes information of the voting target in real time and generates valid statistical data; and a ledger sharing management module 1800 that generates and stores a ledger to be shared with the voting participants and the operating computer, etc. of the aggregate information on the voting results generated by the result verification management module 1700.

The personal information and participant terminal information of those who wish to participate in the voting includes name and phone number information.

The identity verification for the user authentication using the identity authentication means or identity authentication system 5000 will be described later.

The voting target information may include information such as a candidate's affiliation, personal information, academic background, career, and commitment when the voting target is an election. In addition, when the voting target is a survey, the voting target information may include information for voting in favor or against, or selection of, the contents of the questionnaire. In addition, the voting target information may include information corresponding to various voting targets, such as a general meeting of shareholders of the company.

In the case of a plurality of voting targets (candidates) for one voting act of the voting participants, for example, in the case of an election, virtual accounts allocated to each of a plurality of candidates may be given. Accordingly, the number of votes received by candidate A may be counted in the virtual account of candidate A.

The participant identification account management module 1600 records the information that the voting participant voted in the identification account assigned to each voting participant, as well as the voting information of a plurality of other voting participants for the same voting target.

The identification account of the participant may be configured to be accessible through the cloud computing system 10.

In the above embodiment of the present invention, it has been described that the user authentication of the voting participants is authenticated by verifying the identification of the voting participant through the identification authentication system, but is not limited thereto.

The user authentication for voting participation of voters can be performed in the range where the error prevention and security are secured, for example, through a general online self-authentication method. For example, ID/password input, mobile phone authentication, i-PIN authentication, security card authentication, OTP authentication, or identity authentication through an accredited certificate can also be performed.

In addition, the participant identification information management module 1300 of the operating computer includes a user authentication processing module for performing user authentication of each voting participant who requests to participate in voting through the participant terminal, and an anonymization processing module that anonymizes information of the voting participants who the user authentication in the user authentication module is completed.

The user authentication processing module receives the initial information of the voting participants transmitted from at least one participant terminal and performs user authentication processing of the voting participants through identification of each voting participant.

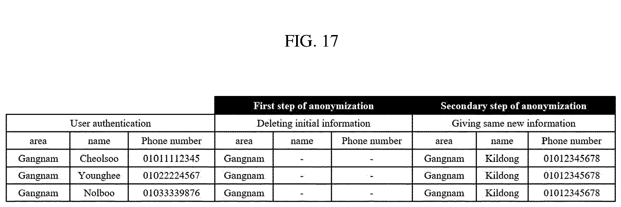

The anonymization processing module can be configured to delete all the initial information of the voting participants whose user authentication has been completed in the user authentication processing module, and to perform anonymization processing of voting participants by generating the same single new information and giving it to all voting participants, shown in FIG. 17.

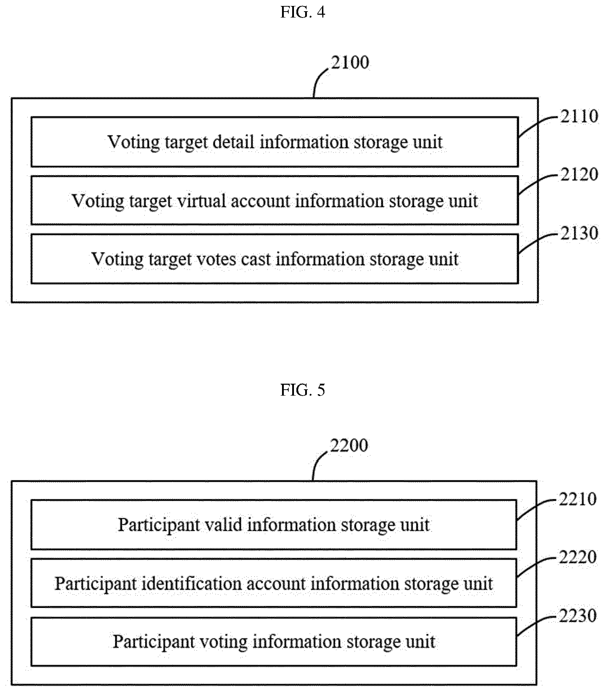

FIG. 4 is a schematic configuration diagram of an embodiment of a voting target information storage unit which is a main part of a data storage computer in the electronic voting system of the present invention.

As illustrated in FIG. 4, the voting target information storage unit 2100 of the present invention comprising: a voting target detailed information storage unit 2110 for storing detailed information on voting targets (candidates, questionnaires, general shareholders' meeting, etc.) in which voting participants participate; a voting target virtual account information storage unit 2120 for storing the virtual account information given to each voting target for storing the vote information of the voting target in connection with each voting target information; and a voting target votes cast information storage unit 2130 for storing the aggregated votes cast information of the voting target in connection with the virtual account of the voting target.

FIG. 5 is a schematic configuration diagram of an embodiment of a participant information storage unit which is a main part of a data storage computer in the electronic voting system of the present invention.

As illustrated in FIG. 5, the participant information storage unit 2200 of the present invention comprising: a participant valid information storage unit 2210 for storing personal information and participant terminal information for obtaining user authentication of a person who wants to participate in the voting, user authentication information of a person who wants to participate in the voting, and qualifications information for voting participation of a person who has completed the user authentication; a participant identification account information storage unit 2220 for storing the identification account information given to each voting participant for storing the voting information of the voting participant in association with the identification information of each voting participant; and a participant voting information storage unit 2230 for storing the aggregated voting information for the voting target of the voting participant in association with the identification account information of each voting participant.

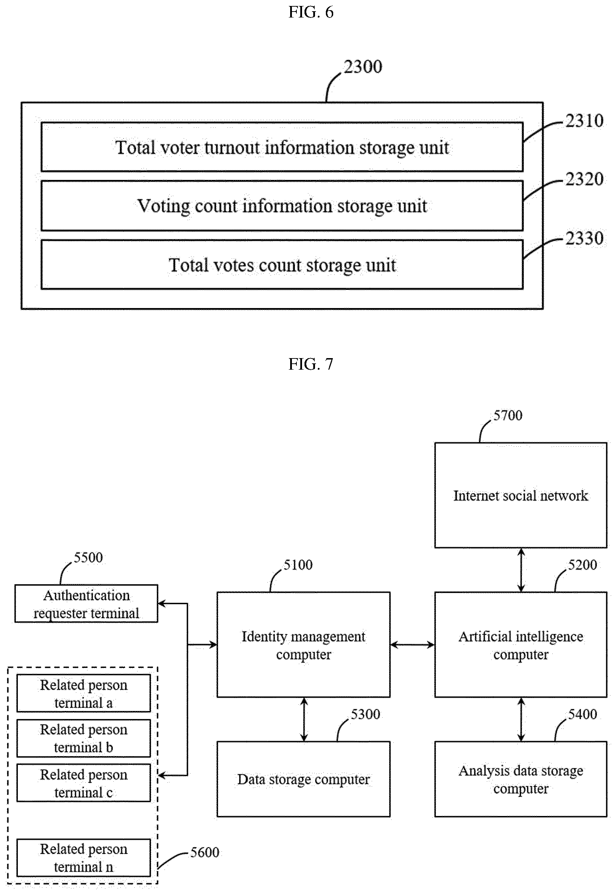

FIG. 6 is a schematic configuration diagram of an embodiment of a results verification information storage unit which is a main part of a data storage computer in the electronic voting system of the present invention.

As illustrated in FIG. 6, the results verification information storage unit 2300 of the present invention comprising: a total voter turnout information storage unit 2310 that counts and stores the total number of identification information given to voting participants and stores the total voter turnout information on a specific voting target calculated using the counting; a vote count information storage unit 2320 that counts the total number of votes for a specific vote target and stores it as the total number of votes; and a total vote count information storage unit 2330 for storing the final numerical value of the identification information of each voting participant who voted for a specific voting target as the total votes cast information of the specific voting target.

FIG. 7 is a schematic configuration diagram of an embodiment of an identity authentication system which is a main part of the electronic voting system of the present invention.

As illustrated in FIG. 7, the identity authentication system5000 of the present invention comprising: an identity management computer 5100 that receives and manages information of related persons and related person groups of authentication requester according to the request for user authentication of the person who wants to participate in the voting requesting user authentication (hereinafter referred to as 'authentication requester'), and manages information of user authentication and identity verification generated; an artificial intelligence computer 5200 that collects and analyzes information such as words used in daily conversations and conversations between acquaintances through the Internet social network 5700, etc. to build a big data database, and performs identity verification based on communication details information of the related persons group according to the user authentication request provided by the identity management computer 5100 and transmits it to the identity management computer 5100;a data storage computer 5300 that stores data including information of authentication requester of user authentication managed by the identity management computer 5100, information of related persons group, information of communication details of related persons group, and information of identity verification transmitted by the artificial intelligence computer 5200; an analysis data storage computer 5400 that stores the big data database built by the artificial intelligence computer 5200, communication details information of a related person group analyzed by the artificial intelligence computer 5200, various data analysis information of the artificial intelligence computer 5200, and statistical information based thereon; a user authentication approval request means provided in the authentication requester terminal 5500 of the authentication requester that is communicatively connected with the identity management computer 5100 to request user authentication and receive user authentication approval information; and an identity verification data providing means provided in at least one related person terminal 5600 that is communicatively connected with the identity management computer 5100 for providing information such as relationship information and communication details with the identity authentication requester to the identity management computer 5100 by related persons such as acquaintances who are related to the user authentication requester.

The identity management computer 5100 may be configured as at least one server computer having a communication means and capable of executing a computer program or a web program. The artificial intelligence computer 5200 may include at least one server computer having a communication means and capable of executing an artificial intelligence (AI) related computer program or web program. The data storage computer 5300 and the analysis data storage computer 5400 may be configured as a database management system (DBMS).The authentication requester terminal 5500 and the related person terminal 5600 are provided with communication means, and may be composed of terminals such as smart phones, tablet computers, personal computers (PC), notebook computers in which applications or web programs can be executed.

The application or web program provided by the authentication requester terminal 5500 may be configured as a personal authentication approval request means for requesting the identity authentication approval to the identity management computer 5100. The application or web program provided by the related party terminal 5600 may be configured as an identity confirmation data providing means for providing the identity management computer 5100 with relationship information and communication details with the requester of the user authentication. The Internet social network 5700 is configured to include various social network services (SNS) and Internet media.

The embodiment of the present invention comprising: receiving, by the identity management computer 5100, information of related persons such as acquaintances of the authentication requester and communication information of related persons from the authentication requester when the authentication requester terminal 5500 requests user authentication; requesting and receiving, by the identity management computer 5100, relationship information and communication details information with the authentication requester to the related person terminal 5600 to verify whether the authentication requester is the same person to the related persons; requesting, by the identity management computer 5100, identity verification by transmitting communication details information of the related persons to the artificial intelligence computer 5200; determining, by the artificial intelligence computer 5200, the consistency between the data analyzed by the received relationship information and communication details information of the related persons and the big data database generated by itself collected from the Internet social network 5700 to verify the identity; transmitting, by the artificial intelligence computer 5200, the identity verification information to the identity verification computer 5100; and transmitting, by the identity management computer 5100, the identity authentication approval information generated based on the received identity verification information to the authentication requester terminal 5500.

When the communication details information is voice information, the information may be analyzed using voice recognition technology or by determining whether the voice matches, or using a voice text conversion technique, and the like.

The relationship information between the related persons and the authentication requester may include, for example, family members, relatives, friends, work colleagues, school classmates, social members, and acquaintances for hobbies.

In addition, the communication details information of the related persons or related person group includes various types of communication information performed using a mobile phone, for example, a mobile phone text message (SMS, MMS, etc.), a chat message in a chatting application program running on a mobile phone, a text message on a social network service (SNS), e-mail letters, and Internet voice calls on mobile phones.

In the embodiment of the identity authentication system 5000 of the present invention, the function of the artificial intelligence computer 5200 is performed by the identity management computer 5100 and the artificial intelligence computer 5200 may be omitted.

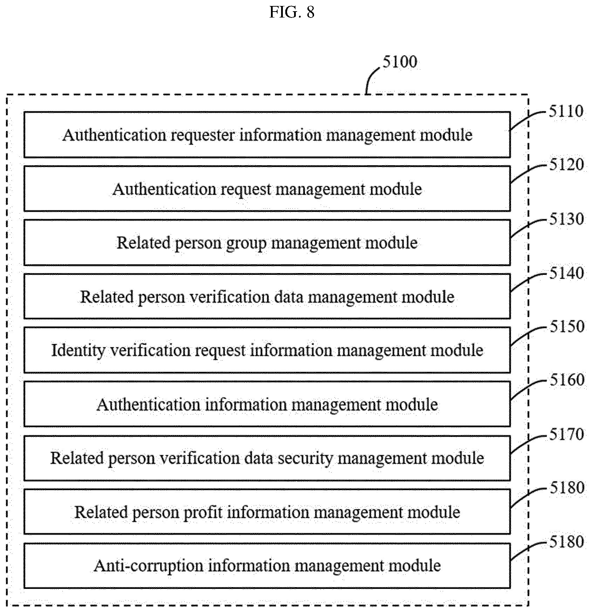

FIG. 8 is a schematic configuration diagram of an embodiment of an identity management computer which is a main part of the identity authentication system in the electronic voting system of the present invention.

As shown in Fig. 8, the identity management computer 5100 or an identity authentication management means 5100 consisting of a computer program executed therein, here the identity management computer and the identity authentication management means are to be used with the same symbol 5100, comprising: an authentication requester information management module 5110 that receives the personal information of the authentication requester and at least one password information input by the authentication requester who wants to perform user authentication into the authentication requester terminal 5500 and stores it in the data storage computer 5300; an authentication request information management module 5120 that receives and manages an authentication request data of user authentication including the authentication requester's name and face photo input into the authentication requester terminal 5500 or personal information including name and mobile phone number, information on consent to the use of information of related persons such as acquaintances of the authentication requester, and consent information for providing information of related persons stored in the terminal being used, such as a mobile phone or personal computer (PC) of the authentication requester; a related person group management module 5130 that receives, stores, and manages related person information including mobile phone numbers, e-mail addresses, SNS addresses, etc. of related persons transmitted from the authentication requester terminal 5500; when the identity management computer 5100 requests the relevant persons to confirm whether the authentication requester is the same person using the information of the related persons, and receives an answer from the related person group terminal 5600 that the related persons are the same person, a related person verification data management module 5140 that receives and manages related person identification data including relationship information between the related person and the authentication requester and evidence data thereon as a basis; an identity verification request information management module 5150 that requests and manages the identity verification data of the authentication requester by transmitting the related person verification data of the related person verification data management module 5140 to the artificial intelligence computer 5200; an authentication information management module 5160 that receives and manages identity verification information of the authentication requester transmitted from the artificial intelligence computer 5200; a related person verification data security management module 5170 that encrypts and decrypts related person information data and personal information received from the related person group terminal 5600; a related person benefit information management module 5180 that stores and manages benefit information including points given to related persons who have agreed to a request for confirmation of whether the authentication requester is the same while providing information on the related person, etc.; and an anti-corruption information management module 5190 that filters false information when the authentication requester or related persons provide false information for the purpose of fraud, and grants penalty points to the wrongdoer.

The related person group management module 5140 may generate and manage related person groups by grouping related persons of the authentication requester into categories for example such as family, relatives, friends, work, school, friendship, and hobbies.

The security of information data and personal information of related persons in the related person identification data security management module 5170 may be encrypted and stored to protect communication details and contents thereof. When it is necessary to analyze the communication details and its contents, it can be decrypted and analyzed, and encrypted and stored again after the analysis processing. In addition, analysis processing is possible without decryption of communication details and contents encrypted by homomorphic encryption technology or the like.

The anti-corruption information management module 5190, for example, in order to prevent self-authentication by a person other than the authentication requester despite the unknown relationship between the authentication requester and the related person for illegal purposes, can use the method of verifying the name through a bank account opened in the name of the authentication requester, or verifying the validity of the name of the authentication requester's mobile phone in use through password confirmation.

The motive of illegal use of the identity authentication system of the present invention can be blocked by taking measures such as giving a strong penalty to an illegal user or deducting a reliability score index.

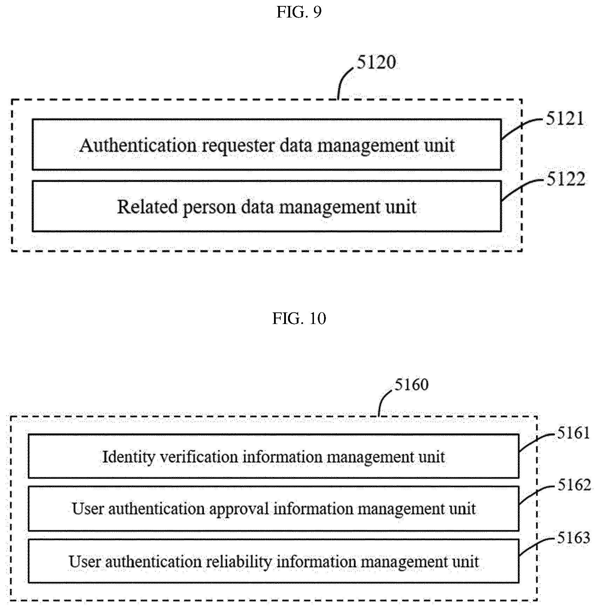

FIG. 9 is a schematic configuration diagram of an embodiment of an authentication request management module which is a main part of the identity authentication system in the electronic voting system of the present invention.

As shown in FIG. 9, the authentication requester data management module 5120 of the present invention comprising: an authentication requester data management unit 5121 that receives and manages the name and face photo, or name and mobile phone number, transmitted by the authentication requester who requested user authentication by inputting it into the authentication requester terminal 5500, and data related to the information of related persons, such as acquaintances who know the requester, stored in electronic devices capable of communicating with external communication media including mobile phone, tablet computers, notebook computers, and personal computers being used by the authentication requester; and a related person information data management unit 5122 that stores and manages related person information and data such as the related person's mobile phone number, e-mail address, and various social network service access addresses.

If the face picture or mobile phone number input from the authentication requester terminal 5500 managed by the authentication requester data management unit 5121 is different from that previously managed, the change history is recorded by the identity management computer 5100 can be stored and managed.

FIG. 10 is a schematic configuration diagram of an embodiment of an authentication information management module which is a main part of the identity authentication system in the electronic voting system of the present invention.

As shown in Figure 10, the authentication information management module 5160 of the present invention comprising: an identity verification information management unit 5161 that receives, stores, and manages identity verification information derived by analyzing the information provided by the related persons that the authentication requester transmitted from the artificial intelligence computer 5200 is the same person; a user authentication approval information management unit 5162 that generates user authentication approval information based on the identity verification information, transmitting it to the authentication requester terminal of the user authentication requester; and a user authentication reliability information management unit 5163 that stores and manages reliability granting and reliability upgrade information to a person who has received approval for user authentication.

The reliability of the person who has received user authentication approval managed by the user authentication reliability information management unit 5163 can be given a reliability index score of, for example, 80 points when the first user authentication is approved, and when data is further analyzed and authenticated by an artificial intelligence computer due to an increase in communication details in the future, a reliability index score may be additionally given according to a predetermined criterion.

The predetermined criterion for adding the index score of reliability can be determined in proportion to, for example, the number of related persons who participated in the identity verification, the total number of related persons groups, the total period during which messages are transmitted and received. And It can be set based on a numerical value that is proportional or inversely proportional to the average of users of each item.

The at least one password input by the user who wants to receive the user authentication of the authentication requester information management unit 5110 is a means for preventing illegal use and involuntary use such as misuse, theft, etc. of the identity authentication request. For example, two passwords can be set for daily use and for emergency use. The daily password is used to receive user authentication normally, and the emergency password is used involuntarily by coercion in abnormal situations such as kidnapping. The daily use password and the emergency password are set differently, and the daily use password and the emergency password are processed in the same way through the above-described procedure when an authentication request is made. However, the user can selectively set the emergency password.

In addition, the user can set or select the action to be taken on the operating computer when the user authentication request is made by entering the emergency password. For example, the operating computer may be set to transmit a message notifying that the user is in an emergency situation to an immediate family member, lover, or friend along with location information. In addition, it can be set to request help by sending a message directly to an investigation agency such as a police station.

In addition, in relation to changing the password, the change of the daily password can be performed in a conventional way by accessing the operating computer, and the change of the emergency password can be performed only face-to-face in a specific location such as a financial institution or community center affiliated with the identity authentication system of the present invention.

In addition, an input field may be configured to input the password together with a name and a face photograph, or a name and a mobile phone number, on the application screen of the authentication requester terminal 5500 when the authentication requester terminal 5500 requests user authentication. In this case, the input order of the items to be entered into the input box may be arbitrarily entered. However, if the input order for each item is consistently set, a procedure to check whether illegal use is performed may be performed according to a change in the input order.

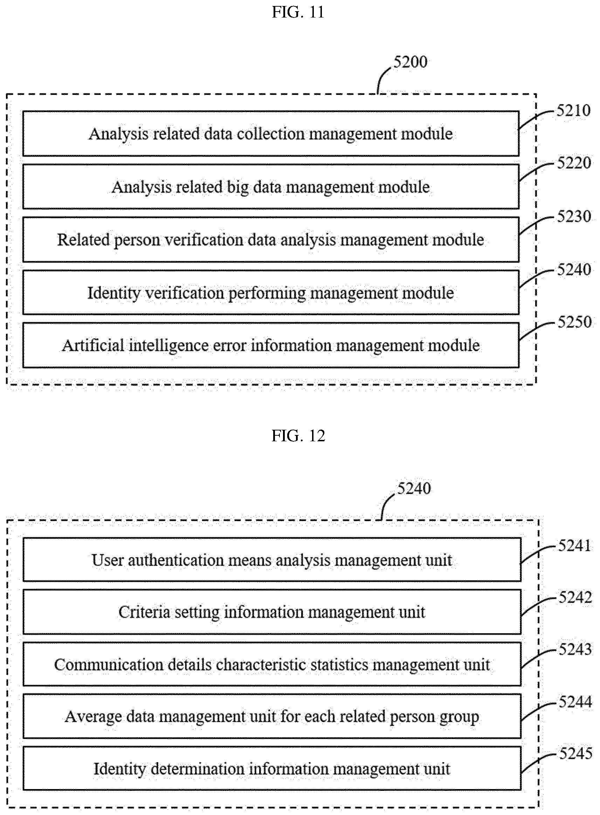

FIG. 11 is a schematic configuration diagram of an embodiment of an artificial intelligence computer which is a main part of the identity authentication system in the electronic voting system of the present invention.

As shown in Figure 11, the artificial intelligence computer 5200 or artificial intelligence identification management means consisting of a computer program running on the artificial intelligence computer 5200 of the present invention comprising: an analysis-related data collection management module 5210 for collecting and managing data such as words, vocabulary, sentences, expressions, etc. related to a specific relationship used in the relationship group of the authentication requester; an analysis-related big data management module 5220 that manages the data collected by the analysis-related data collection management module 5210 as big data and manages the update of big data; a related person verification data analysis management module 5230 that analyzes and manages data for each relationship in a relationship group based on related persons information of the authentication requester transmitted from the operating computer; an identity verification performance management module 5240 that determines whether the authentication requester is identical based on consistency of the analyzed data for each relationship and the big data; and an artificial intelligence error information management module 5250 that manages a method for determining an error when an error occurs in the operation of the artificial intelligence computer 5200, a method for manually setting the operation of the artificial intelligence computer 5200, and a method for solving the problem due to the rapid development of artificial intelligence.

Determination of artificial intelligence operation errors in the artificial intelligence error information management module 5250, manual operation setting, and problem solving due to strong artificial intelligence, respectively, can be used to control artificial intelligence using the collective intelligence convergence system (Applicant's registered patent No. 10-1804960).

FIG. 12 is a schematic configuration diagram of an embodiment of an identity verification execution management module which is a main part of the identity authentication system in the electronic voting system of the present invention.

As shown in Figure 12, the identity verification execution management module 5240 comprising: a user authentication means analysis management unit 5241 that analyzes and manages communication details between a person who has been authenticated by various existing means such as a user authentication-related certificate and a mobile phone check and the related persons; a criterion setting information management unit 5242 that sets and manages a criterion for each related person group to be confirmed by how many or more related persons; a communication details characteristic statistics management unit 5243 that analyzes and statistics communication details analysis contents in the user authentication means analysis management unit 5241 and the characteristics of transmission and reception of communication details between a person who has been authenticated according to the criteria set by the criteria setting information management unit 5242 and the related persons; an average data management unit 5244 for each related person group, which calculates and manages average data of all members or persons who have authenticated themselves for transmission/reception items for each related person group; and an identity determination information management unit 5245, which compares and analyzes the similarity and difference with the average data for the authentication request of the authentication requester, determines whether the authentication is identical, and manages the result.

The criteria setting information management unit 5242 may be set the criteria which for example divides the group of related persons into, for example, family, friends, and workplace, and sets the number of family members to at least 3, the number of friends to at least 7, and the number of office workers to at least 10.

In addition, in the communication details characteristic statistics management unit 5243, for example, the characteristics of transmission and reception are the number of related persons for each related person group, the total transmission and reception period, transmission and reception period, number of transmission and reception, reaction time between transmission and reception, title, subject, word , vocabulary, sentences, honorifics, abbreviations, whether emoticons are used, usage, punctuation marks, whether abbreviations or short words are used, singularities in content, etc. Mathematical main values such as the average, standard deviation, maximum value, and minimum value of each item related to the transmission and reception characteristics may be calculated, or a frequently used expression may be stored in the analysis data storage computer 5400.

The average data management unit 5244 for each related person group may write, for example, as shown in Table 1 below in order to calculate average data of transmission and reception items for each related person group.

**[Table 1]**

| | **family** | **friends** | **workplace** |
|---|---|---|---|
| Number of related persons | 3persons | 7persons | 10persons |
| Total period of Transmission/Reception | 350days | 70days | 280days |
| Cycle of Transmission/Reception | 5days | 12days | 2days |
| Number of Transmission/Reception | 2times/week | 1 times/week | 3times/week |
| Total time of Transmission/Reception | 15minutes | 90minutes | 3minutes |
| Topic | Meal | Promise | Work |
| Word | Rice | Location | Report |
| Sentence | Eat | Meet | Dining together |

In the determination of identity in the identity determination information management unit 5245, for example, when the numerical value of a specific item, such as the number of related persons, is less than the average, the criterion of other items may be strengthened than the average.

For example, the transmission/reception period may be longer, the transmission/reception period may be further reduced, the number of transmission and reception is required more, the response time between transmission/reception may be further shortened, or the degree of matching of subjects, words, and sentences may be increased.

On the other hand, when the numerical value of a specific item, such as the number of related persons, is greater than the average, the criteria for other items may be relaxed compared to the average to determine equality.

The analysis-related big data management module 5220 of the artificial intelligence computer 5200 receives pre-entered data such as representative words, vocabulary, sentences, and expressions used in the relation by the system operator for each relation group of the authentication requester and data provided by those who have agreed to use the identity authentication system of the present invention, updates and accumulates data such as representative words, vocabulary, sentences, and expressions used in the relationship. In addition, the artificial intelligence computer can access various social network services (SNS) and internet media to collect expressions used in specific relationships, and store and manage these data in the analysis data storage unit 5400 as big data.

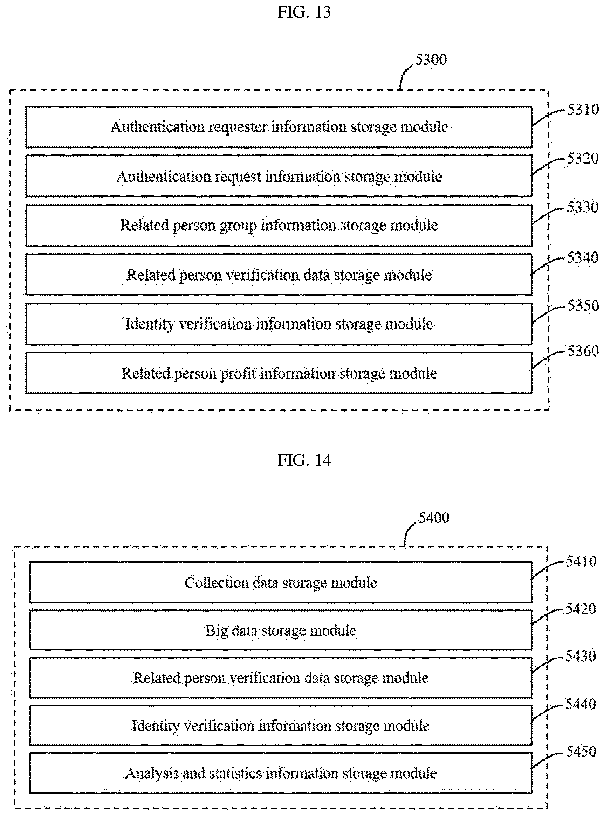

FIG. 13 is a schematic configuration diagram of an embodiment of a data storage computer which is a main part of the identity authentication system in the electronic voting system of the present invention.

As illustrated in FIG. 13, the data storage computer 5300 or a data storage means included in the data storage computer 5300, comprising: an authentication requester information storage module 5310 that stores personal information and at least one password of a person who wants to receive user authentication received from the identity management computer 5100; an authentication request information storage module 5320 that stores the name and facial photo of the authentication requester, or name and mobile phone number, information of related persons, etc. received by the identity management computer 5100; a related person group information storage module 5330 that groups related persons provided by the authentication requester and stores related person group data; a related person verification data storage module 5340 that stores communication details data for each relationship group of the related person group received by the identity management computer 5100; an identity verification information storage module 5350 that stores the determined identity verification information by determining the consistency between the analysis result of the communication details data for each relationship group and the big data; and a related person benefit information storage module 5360 that stores benefit information granted to those who have provided communication details with the authentication requester to the identity management computer 5100.

FIG. 14 is a schematic configuration diagram of an embodiment of an analysis data storage computer which is a main part of the identity authentication system in the electronic voting system of the present invention.

As illustrated in FIG. 14, the analysis data storage computer 5400 or an analysis data storage means included in the analysis data storage computer 5400, comprising: a collection data storage module 5410 that stores data related to identity verification of the authentication requester collected by the artificial intelligence computer 5200 through various routes; a big data storage module 5420 that stores the collected the data related to identity verification as big data and managing updates; a related person verification data storage module 5430 that stores the analyzed related person verification data; an identity verification information storage module unit 5440 that stores the identity verification information regarding whether the authentication requester determined by analysis by the artificial intelligence computer 5200 is the same person; and an analysis and statistics information storage module5450 that analyzes in which the artificial intelligence computer stores statistical information derived by analyzing the analysis information of information of related persons of persons for whom user authentication is approved and the characteristics of transmission and reception of communication details between persons for whom user authentication is approved and related persons.

The data storage means 5300 and the analysis data storage means 5400 are not limited to the above embodiment. In addition, it may be configured to store the execution results of the identity management computer 5100 and the artificial intelligence computer 5200.

In the embodiment of the present invention, when the authentication requester is a corporation (company) rather than an individual, it can be considered that the corporation does not have a risk of personal information leakage and that the method of verifying the identity of the corporation is well prepared in the existing system. For example, it can be applied by setting a different criterion, such as using the address of a corporation instead of the photo of the authentication requester, or by relaxing the method of verifying identity compared to the case of an individual.

For example, if the authentication requester is a corporation (company), the related person group can be set with at least one employee, customer, and customer.

In addition, as an auxiliary means for preventing illegal use, verification through the bank of a corporation (company), verification through corporate registration number inquiry, or verification method through business registration number can be used.

Hereinafter, the operation of the electronic voting system of the embodiment of the present invention described with reference to FIGS. 1 to 14 will be described in detail. An embodiment of the electronic voting system of the present invention is largely composed of a voting participant identification process, an anonymization process of the voting participant, a voting process of the voting participant, a ledger sharing process of voting result information, and a voting result verification process.

### <User authentication of voting participants>

Online user authentification of voting participants (here, both those who want to participate in voting and voting participants are used interchangeably) are performed using the identity authentication means or identity authentication system (hereinafter collectively referred to as the 'identity authentication system').

The operating computer performs an identity verification of the voting participants based on the consistency information between data capable of inferring the relationship between the voting participant and the related person by analyzing the communication details between the related people group and the voting participant provided through information of the related person group including the acquaintances provided by the voting participants to verify the identity of the voting participants and attribute data representing acquaintance relationships between persons collected and stored by the identity authentication system, and performs the user authentication of the voting participants based on the extracted identity verification information of the voting participants.

The information provided from the voting participants for identity verification and user authentication of the voting participants includes the names of voting participants and their mobile phone numbers. The user authentication can be performed by receiving a photo of the voting participant, but in the electronic voting system of the present invention, since anonymization of the voting participant is important, it is preferable to receive a name. In addition, it is good to be provided with the gender information of the voting participants for the verification of the voting results and statistical processing. In addition, in the electronic voting system of the present invention, a related person group or related persons for identity verification by using the identity verification system in the electronic voting system of the present invention sets a condition for confirmation of a predetermined number or more among specific groups such as family, friends, lovers, co-workers, etc., and then the artificial intelligence computer may be configured to automatically combine a set number according to a result of performing a task.

In addition, when the subject of voting is an election, it is necessary to confirm the age of the voting participant in order to confirm the voting age of the voting participant. For example, if the electable date of birth is set to October 15, 1999, the relevant information can be provided by requesting confirmation from the related persons as to whether the voting participant was born before the relevant date and month.

In addition, if the subject of voting is a local election, it is necessary to confirm the address of the voting participant. In this case, the identity authentication system is affiliated with an address confirmation organization such as a courier company, post office, or e-commerce company that delivers a commerce object to a specific person's address, or joins as a member, and the identity authentication system provides the name and phone number of the voting participant to the address verification institution, and can check the record of whether or not parcels or mail have been recently delivered or delivered to the address of the voting participant.

In addition, in the early stage of system construction of the present invention, it is possible to supplemental verify the age and address of the voting participants through business alliances with public institutions such as government agencies.

### <Anonymization of voting participants>

In order to proceed with voting in the electronic voting system of the present invention, the information of the voting participants whose user authentication and voting participation qualifications are confirmed is anonymized. In order to anonymize voting participants, the operating computer deletes all the initial information of voting participants (eg, name and phone number information of voting participants to perform user authentication), and then is given the same new information (eg, one name and one specific phone number) to all voting participants. After the operation computer confirms that the initial information of all voting participants is deleted and the same new information is given, unique identification information is given to each voting participant. The unique identification information given to each voting participant can be created by, for example, a combination of numbers including country information and regional information (eg, kr-02-554-3028, etc.).

In this way, before giving unique identification information to the voting participants, the anonymization process as described above is performed, so that it is impossible to know whose unique identification information is assigned.

If the anonymization process is described as an example, as shown in FIG. 17, if three voting participants in the same area want to participate in voting by accessing the operating computer, the anonymization process deletes all the name and phone number information of the three voting participants from the operating computer, generates one name and one specific phone number information, gives the same new information to the three voting participants, and after confirming that the initial information of all voting participants has been deleted and replaced with the same new information, generates three unique identification information and give them to each of the three voting participants in a random manner.

As a result, each of the three voting participants has their own identification information, but it is impossible to know which of the three provided identification information is, and as a result, it is anonymized.

### <Vote by voting participants>

The unique identification information of a voting participant given through the anonymization process of the voting participant can be used as an ID for voting in the electronic voting system of the present invention.

When a voting participant conducts a vote, voting for the voting target is carried out only with the unique identification information given to the voting participants, and the voting participant's personal information can be thoroughly blocked. However, it may be configured so that information about the region, gender, age, etc. of the voting participants can be utilized for statistical processing, etc. within the scope that does not harm the secret ballot.

If the voting participant is given unique identification information and does not immediately proceed with voting, if within the voting period, access the operating system and log in using the unique identification information as an ID, and then vote.

After the voting participant completes the voting, the voting participant's unique identification information may be deactivated and processed so that it cannot be used for voting. After the voting participant votes with the unique identification information, the unique identification information is deactivated so that voting cannot be performed again, but the operation computer collects the voting information of the voting participant and the vote information of the voting target and can be configured to be used for inquiry.

In addition, in order to prevent fraudulent proxy voting of the vote, if the vote is not conducted with the unique identification information within a set period, the corresponding unique identification information may be inactivated.

### <Shared ledger of voting result information>

The total number of unique identification information given to voting participants whose identity verification has been completed and their eligibility to participate in the voting for the voting target has been confirmed is calculated and stored as the information on the total number of voting participants(e.g., the total number of voters if the subject of voting is an election) who participated in the voting target. The total number of unique identification information of the voters who voted for the voting target (eg, all candidates if the voting target is an election) is calculated as the sum of the total number of votes and stored as the total number of votes. With the final result numerical value stored in the unique identification information of the voting participants who voted for a specific target, the total number of votes for a specific target among the voting targets is calculated and stored.

The results of the electronic voting performed based on the unique identification information of the voting participants are configured so that the voting participants, voters, and operating computers can share them in a single ledger form.

Hereinafter, the ledger sharing process of the electronic voting system of the present invention will be described in more detail by taking an election as an example.
1) Voting participants who have verified their identity and eligibility to participate in voting (hereinafter referred to as 'voters') when a votes for candidate A, candidate A sends plus 1 vote (+1) information to own virtual account (for counting votes) and at the same time transmit the plus 1 vote (+1) information to voter a's unique identification information (eg, kr-0 1-785-123456789).
2) Voter a stores one plus vote (+1) in an identification account (allocated storage space provided by the cloud, etc.) linked to his or her own identification information.
3) When voter b, whose identity verification and voting eligibility have been confirmed, votes for candidate A, candidate A adds 1 plus (+1) information to voter a's 1 and adds 2 to his virtual account (for counting votes).

At the same time, voter b sends the plus one vote (+1) information to voter b's unique identification information (eg, kr-01-785-1234567444), and the number of votes 2 is stored by adding the number of votes (+1) to candidate A of voter at o the identification account associated with voter a's unique identification information.

At the same time, the number of votes 2 is stored by adding the number of votes (+1) of voter b to candidate A to the identification account linked to the unique identification information of voter a. In other words, candidate A may be configured to transmit and store a new number of votes of 2 in each identification account of the voters a and b who voted for himself/herself.

4) When voter c, who has verified his/her identity and eligibility to participate in voting, votes for candidate A, candidate A adds +2 votes (+2) information to 1 voted vote by voter c and adds 3 votes to his/her virtual account (for counting votes).

At the same time, voter c transmits plus one vote (+1) information to voter c's unique identification information (eg, kr-01-785-1234567547), and the number of votes 3 is stored by adding the number of votes (+2) to candidate A of voter a and b to the identification account associated with voter c's unique identification information.

At the same time, the number of votes 3 is stored by adding the number of votes (+1) to candidate A of voter c to each identification account associated with the unique identification information of voters a and b.

In other words, candidate A may be configured to transmit and store a new number of 3 votes in each identification account of the voters (a and b and c) who have voted for him.

An example of the ledger sharing process of the electronic voting system of the present invention is shown in Table 2 below.

**[Table 2]**

| Candidates | Voters | Ledger | Number of Votes cast |
|---|---|---|---|
| A | a | 1+1+1 | 3 |
| | B | 1+1+1 | |
| | c | 1+1+1 | |
| | | | |
| C | f | 1+1+1+1+1+1 | 5 |
| | g | 1+1+1+1+1+1 | |
| | h | 1+1+1+1+1+1 | |
| | i | 1+1+1+1+1+1 | |
| | j | 1+1+1+1+1+1 | |

Voters a, b, and c who voted for candidate A simultaneously share in real time the cumulative number of votes for candidate A according to the above procedure. Therefore, as a result, candidate A and all voters who voted for candidate A share a ledger with the same result value.

Due to the characteristic configuration of the electronic voting system of the present invention, the personal information of the voting participants is already deleted and anonymized with the assigned unique identification information, so personal information exposure is fundamentally blocked, and the cumulative number of votes and voting result values since sharing of is processed as encrypted identification information, it can be implemented so that personal information is not exposed.

In addition, the contents of the shared ledger of each candidate and voter can be implemented so that the data is stored in the operating system (physical space such as cloud space and server) in real time to track and manage the vote status for each candidate in real time.

In addition, the candidate's vote count information and voter's real-time vote share sharing information of the voters allocate virtual space such as cloud in the system to each candidate and voter, respectively, and store it, and at the same time, each candidate and each voter's personal terminal (pc, laptop, mobile phone, communication equipment, etc.) can be operated to prevent manipulation and forgery by double storing data and ledgers in the physical space (hard disk, etc.).

In addition, the electronic voting system of the present invention grants unique identification information through anonymization to voters whose user authentication and voting qualifications have been confirmed, and the voting participants vote based on the received unique identification information. Therefore, in the voting results, invalid votes do not occur, and the verification method can be made concisely and clearly.

In addition, as can be seen from the above description, according to the embodiment of the present invention, false and fraudulent qualifications of voters can be fundamentally blocked, and the anonymity of voters is thoroughly guaranteed to ensure secret voting, and to equal voting is thoroughly guaranteed by giving only one unique identification information, and voting can be executed in a fundamentally impossible manner, such as manipulation of the total number of voting participants, manipulation of the number of votes cast per candidate, and manipulation of counting by joint conspiracy between candidates.

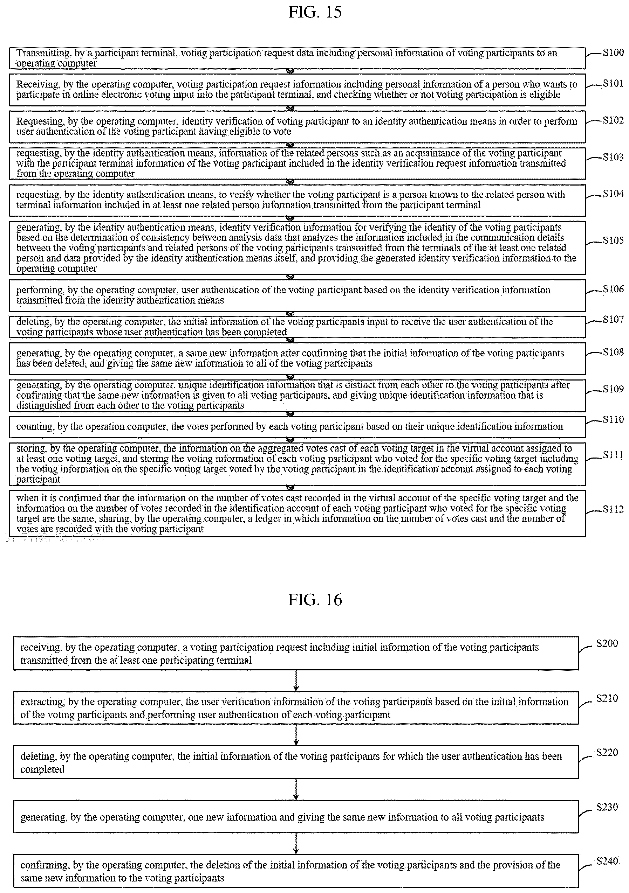

FIG. 15 is a schematic configuration diagram of an embodiment of an electronic voting method of the present invention.

As shown in Figure 15, the electronic voting method of the present invention comprising: transmitting, by a participant terminal, voting participation request data including personal information input by a person who wants to participate in online electronic voting to an operating computerS 100; receiving, by the operating computer, voting participation request information including personal information of a person who wants to participate in online electronic voting input into the participant terminal, and checking whether or not voting participation is eligible S101; requesting, by the operating computer, identity verification of voting participant to an identity authentication means in order to perform user authentication of the voting participant having eligible to vote S 102;requesting, by the identity authentication means, information of the related persons such as an acquaintance of the voting participant with the participant terminal information of the voting participant included in the identity verification request information transmitted from the operating computer S103; requesting, by the identity authentication means, to verify whether the voting participant is a person known to the related person with terminal information included in at least one related person information transmitted from the participant terminal S104; generating, by the identity authentication means, identity verification information for verifying the identity of the voting participants based on the determination of consistency between analysis data that analyzes the information included in the communication details between the voting participants and related persons of the voting participants transmitted from the terminals of the at least one related person and data provided by the identity authentication means itself, and providing the generated identity verification information to the operating computer S105; performing, by the operating computer, user authentication of the voting participant based on the identity verification information transmitted from the identity authentication means S106; deleting, by the operating computer, the initial information of the voting participants input to receive the user authentication of the voting participants whose user authentication has been completed S107; generating, by the operating computer, a same new information after confirming that the initial information of the voting participants has been deleted, and giving the same new information to all of the voting participantsS108; generating, by the operating computer, unique identification information that is distinct from each other to the voting participants after confirming that the same new information is given to all voting participants, and giving unique identification information that is distinguished from each other to the voting participants S109; counting, by the operation computer, the votes performed by each voting participant based on their unique identification information S 110; storing, by the operating computer, the information on the aggregated votes cast of each voting target in the virtual account assigned to at least one voting target, and storing the voting information of each voting participant who voted for the specific voting target including the voting information on the specific voting target voted by the voting participant in the identification account assigned to each voting participant Sill; and when it is confirmed that the information on the number of votes cast recorded in the virtual account of the specific voting target and the information on the number of votes recorded in the identification account of each voting participant who voted for the specific voting target are the same, sharing, by the operating computer, a ledger in which information on the number of votes cast and the number of votes are recorded with the voting participants 112.

In the embodiment of the present invention of FIG. 15, the order of the step S102 of confirming whether the voting participant is eligible to participate in the voting, and the steps S103 to S107 of performing the identification of the voting participant can be performed in reverse order. That is, after completing the user authentication of the voting participant, the process of confirming whether the voting participant who has completed the user authentication has the qualification to participate in the voting for the corresponding voting target may be performed.

FIG. 16 is a schematic configuration diagram of another embodiment of the electronic voting method of the present invention.

As shown in FIG. 16, the electronic voting method through the anonymization of the voting participants of the present invention, comprising: receiving, by the operating computer, a voting participation request including initial information of the voting participants transmitted from the at least one participating terminal S200; extracting, by the operating computer, the user verification information of the voting participants based on the initial information of the voting participants and performing user authentication of each voting participant S210; deleting, by the operating computer, the initial information of the voting participants for which the user authentication has been completed S220; generating, by the operating computer, one new information and giving the same new information to all voting participants S230; and confirming, by the operating computer, the deletion of the initial information of the voting participants and the provision of the same new information to the voting participants S240.

FIG. 17 is a schematic configuration diagram of an embodiment of an anonymization process which is a main part of the electronic voting method of the present invention.

The embodiments of the present invention described above are only some of the various predictable embodiments implementing the technical idea of the present invention.

In the electronic voting system and method of the present invention, the user authentication of the voting participants and verification of information required for voting participation is performed based on the identity verification information of a certain number of related persons of the voting participants, and the technical idea for the anonymization of the voting participants whose user authentication has been completed, and the voting participants who have undergone the anonymization process are given unique identification information to participate in voting, and the unique identification information given to the voting participants is used as the basis for voting and voting results counting, and various types of technical ideas included in the technical idea that solve all problems of electronic voting by storing and sharing the ledger for recording voting results in a cloud system with storage space for voting participants and voting subjects, as well as on the operating computer and on its own server It is natural that the embodiment is included in the protection scope of the present invention.

## Claims

1. A system for electronic voting comprising: an operation computer comprising at least one processor and a memory coupled to the processor that causes the system to perform:
performing, by at least one processor of the operating computer, user authentication of voting participants who wish to participate in the online electronic voting;
anonymizing, by at least one processor of the operating computer, information of the voting participants whose the user authentication has been completed;
giving, by at least one processor of the operating computer, unique identification information to each of the voting participant who has completed anonymization process;
collecting, by at least one processor of the operating computer, the voting information that the electronic voting was conducted using the unique identification information given to the voting participants and counting the collected voting information as a voting result.

2. The system for electronic voting of claim 1, further comprising distributing and storing the voting results in the storage means of the voting participants and the storage means of the voting targets to share a ledger of the voting results.

3. The system for electronic voting of claim 1, further comprising an identity authentication system that supports user authentication of the voting participants; wherein the user authentication of the voting participants causes at least one processor to:
request to confirm whether the voting participant is the same person as the person known to the related person with terminal information of related persons including the acquaintance of the voting participant obtained from the participant terminal used by the voting participant and receive the identity verification information regarding the voting participant;
extract information of related parties who agree that the voting participants are the same from among the received identity verification information, transmit the extracted voting participants to the identity authentication and request identity authentication of the voting participants; and
determine the user authentication of the voting participant by receiving the identity authentication related information of the voting participant transmitted from the identity authentication system.

4. The system of electronic voting of claim 3, wherein generation of the identity authentication related information of the voting participant received by the operating computer comprising:
analyzing, by the identity authentication system, communication details between extracted related persons transmitted from the operating computer and the voting participants and extracting relationship data of the communication details indicating a specific relationship between people;
determining, by the identity authentication system, consistency between the extracted relationship data of the communication details and relationship data indicating a specific relationship between persons that the identity authentication system has itself or is collected and analyzed from external media; and
generating, by the identity authentication system, information on whether the voting participants are identical based on the determination of the consistency.

5. The system for electronic voting of claim 1, wherein the anonymization of the voting participant information causes at least one processor to:
delete all of the initial information provided by the voting participants to receive user authentication;
generate single new information and give the same single new information to all voting participants whose initial information has been deleted to anonymize the information of all voting participants by the same single new information.

6. The system for electronic voting of claim 2, wherein the sharing of the ledger of the voting results causes at least one processor to:
manage virtual account information, which is a storage space allocated to at least one voting target, and identification account information, which is a storage space allocated to each of the voting participants;
store information on the number of votes cast for each voting target in the at least one virtual account of the voting target;
store the voting information of other voting participants who voted for the specific voting target, including user voting information for the specific voting target in the identification account of each of the voting participants;
process the information recorded in the virtual account of the specific voting target and the information recorded in the identification account of each voting participant who voted for the specific voting target to be the same.

7. The system for electronic voting of claim 1, further comprising a cloud computing system that is connected to communication with the operating computer to store voting related information including voting information of the voting participants, votes cast information of a voting target, and voting result aggregate information, and connected to communication with the terminal of the voting participant and the terminal of the voting target to provide stored voting related information.

8. An electronic voting method comprising:
performing, by at least one processor of the operating computer, user authentication of voting participants who wish to participate in the online electronic voting;
anonymizing, by at least one processor of the operating computer, information of the voting participants whose the user authentication has been completed;
giving, by at least one processor of the operating computer, unique identification information to each of the voting participant who has completed anonymization process;
collecting, by at least one processor of the operating computer, the voting information that the electronic voting was conducted using the unique identification information given to the voting participants and counting the collected voting information as a voting result.

9. The electronic voting method of claim 8, further comprising distributing and storing the voting results in the storage means of the voting participants and the storage means of the voting targets to share a ledger of the voting results.

10. The electronic voting method of claim 8, further comprising an identity authentication system that supports user authentication of the voting participants; wherein the user authentication of the voting participants causes the operating computer to:
request to confirm whether the voting participant is the same person as the person known to the related person with terminal information of related persons including the acquaintance of the voting participant obtained from the participant terminal used by the voting participant and receive the identity verification information regarding the voting participant;
extract information of related parties who agree that the voting participants are the same from among the received identity verification information, transmit the extracted voting participants to the identity authentication and request identity authentication of the voting participants; and
determine the user authentication of the voting participant by receiving the identity authentication related information of the voting participant transmitted from the identity authentication system.

11. The electronic voting method of claim 10, wherein generation of the identity authentication related information of the voting participant causes the identity authentication system to:
analyze communication details between extracted related persons transmitted from the operating computer and the voting participants and extracting relationship data of the communication details indicating a specific relationship between people;
determine consistency between the extracted relationship data of the communication details and relationship data indicating a specific relationship between persons that the identity authentication system has itself or is collected and analyzed from external media; and
generate information on whether the voting participants are identical based on the determination of the consistency.

12. The electronic voting method of claim 8, wherein the anonymization of the voting participant information causes at least one processor to:
delete all of the initial information provided by the voting participants to receive user authentication;
generate single new information and give the same single new information to all voting participants whose initial information has been deleted to anonymize the information of all voting participants by the same single new information.

13. The electronic voting method of claim 9, wherein the sharing of the ledger of the voting results causes at least one processor to:
manage virtual account information, which is a storage space allocated to at least one voting target, and identification account information, which is a storage space allocated to each of the voting participants;
store information on the number of votes cast for each voting target in the at least one virtual account of the voting target;
store the voting information of other voting participants who voted for the specific voting target, including user voting information for the specific voting target in the identification account of each of the voting participants;
process the information recorded in the virtual account of the specific voting target and the information recorded in the identification account of each voting participant who voted for the specific voting target to be the same.

14. A system for electronic voting comprising: an operation computer that manages the electronic voting of voting participants by performing anonymization of the voting participants participating in the online electronic voting, and comprising at least one processor and a memory coupled to the processor that causes the system to perform:
deleting, by at least one processor of the operating computer, initial information including name and phone number information provided by the voting participants;
giving, by at least one processor of the operating computer, same single new information to all voting participants whose initial information has been deleted; and
performing, by at least one processor of the operating computer, anonymization by marking voting participants with the same single new information.

15. A system for electronic voting of claim 14, wherein the at least one processor of the operating computer generates and gives unique identification information that is distinct from each other to voting participants whose anonymization has been completed.

16. A system for electronic voting comprising: an operating computer that collects and manages voting information of voting participants participating in online electronic voting, and comprising at least one processor and a memory coupled to the processor that causes the system to perform:
storing, by at least one processor of the operating computer, information of virtual account, which is a storage space allocated to each of the at least one voting target, and information of identification account, which is a storage space allocated to each of the voting participants,
storing, by at least one processor of the operating computer, information on the number of votes cast for each voting target in the at least one virtual account of the voting target;
storing, by at least one processor of the operating computer, voting information of other voting participants who voted for a specific voting target, including user voting information for the specific voting target in the identification account of each of the voting participants;
processing, by at least one processor of the operating computer, the information recorded in the virtual account of the specific voting target and the information recorded in the identification account of each voting participant who voted for the specific voting target to be the same.

17. An electronic voting method comprising:
deleting, by an operating computer, initial information including name and phone number information provided by the voting participants;
giving, by the operating computer, same single new information to all voting participants whose initial information has been deleted; and
performing, by the operating computer, anonymization by marking voting participants with the same single new information.

18. The electronic voting method of claim 17, further comprising generating and giving, by the operating computer, unique identification information that is distinct from each other to the voters who have completed the anonymization.

19. A electronic voting method comprising:
storing, by at least one processor of the operating computer, information of virtual account, which is a storage space allocated to each of the at least one voting target, and information of identification account, which is a storage space allocated to each of the voting participants,
storing, by at least one processor of the operating computer, information on the number of votes cast for each voting target in the at least one virtual account of the voting target;
storing, by at least one processor of the operating computer, voting information of other voting participants who voted for a specific voting target, including user voting information for the specific voting target in the identification account of each of the voting participants;
processing, by at least one processor of the operating computer, the information recorded in the virtual account of the specific voting target and the information recorded in the identification account of each voting participant who voted for the specific voting target to be the same.
